# EUROPEAN PATENT APPLICATION

(11) **EP 2 216 876 A1**
(43) Date of publication of application: **11.08.2010**
(21) Application number: 08857949.5
(22) Date of filing: 20.11.2008
(51) Int. Cl.: H02J 7/00, H01M 10/44, H02J 1/00, H02J 7/14, H02J 7/16, H02M 3/155

(54) **POWER SUPPLY APPARATUS FOR VEHICLES**

(30) Priority: 06.12.2007 JP 2007315608
(71) Applicant: Panasonic Corporation, Kadoma-shi Osaka 571-8501 (JP)
(72) Inventor: WAGATSUMA, Masato, Osaka-shi Osaka 540-6207 (JP); OSHIDA, Syuji, Osaka-shi Osaka 540-6207 (JP); WATANABE, Hisazumi, Osaka-shi Osaka 540-6207 (JP); AKIMASA, Koji, Osaka-shi Osaka 540-6207 (JP)
(74) Representative: Grünecker, Kinkeldey, Stockmair & Schwanhäusser Anwaltssozietät
(86) International application number: PCT/JP2008/003405
(87) International publication number: WO 2009/072245

(57) **Abstract**

It comprises load (2) and first storage battery (3) connected to generator (1), and second storage battery (5) connected to generator (1) via DC/DC converter (4), wherein controller (6) connected to DC/DC converter (4), receiving a regeneration signal emitted from outside, controls DC/DC converter (4) so that the voltage of input/output terminal (8) becomes the first target voltage that is lower by the first fixed value than the voltage of input/output terminal (8) to which generator (1) is connected in DC/DC converter (4) at the time in order to charge second storage battery (5), and when regeneration signal reception is ended, it controls DC/DC converter (4) so that the voltage of input/output terminal (8) becomes the second target voltage that is higher by the second fixed value than the voltage of input/output terminal at the time, and thereby, it is possible to enhance the regenerative power recovering efficiency irrespective of conditions during braking.

## Description

### TECHNICAL FIELD

The present invention relates to a power supply apparatus for vehicles for recovering regenerative energy in speed reduction of vehicles.

### BACKGROUND ART

Recently, vehicles capable of realizing fuel cost saving by recovering braking energy in speed reduction are developed. A power control device for a regeneration system used for such vehicles is proposed in Patent document 1. Fig. 4 is a block diagram of such a power control device.

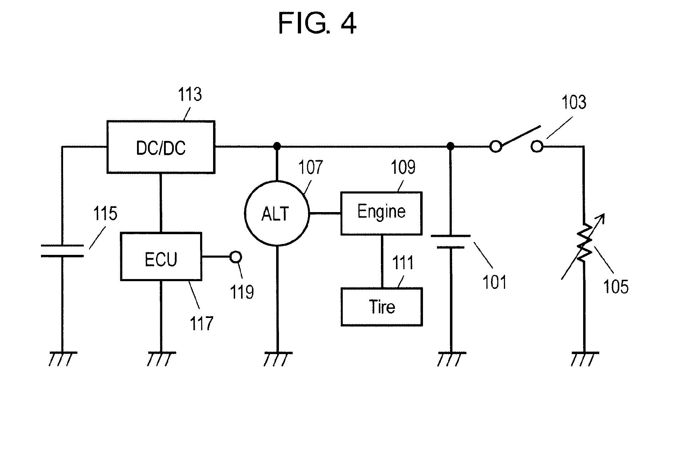

In Fig. 4, main power source 101 is a lead battery, and load 105 is connected to a positive electrode thereof via ignition switch 103. Also, generator 107 for vehicles is connected to the positive electrode of main power source 101. Since generator 107 is mechanically connected to engine 109, generator 107 is driven by the operation of engine 109. Further, tire 111 is mechanically connected to engine 109, and tire 111 is rotated by the driving force of engine 109, causing the vehicle to run. Also, during speed reduction by braking, tire 111 rotates due to the inertia of the vehicle, causing engine 109 to rotate as well. Generator 107 is driven by the rotational energy, and power is generated by braking energy.

As against such vehicles, in order to efficiently recover the power (hereinafter called regenerative power) by using braking energy, storage battery 115 is connected to generator (ALT) 107 via direct current converter (hereinafter called DC/DC converter) 113. Because a large-capacity electric double-layer capacitor is used for storage battery 115, it is possible for example to efficiently recover great power generated for a short time during sudden speed reduction. Also, computing device (ECU) 117 is connected to DC/DC converter 113 for the purpose of controlling the operation. Further, computing device 117 is provided with signal receiving terminal 119 for receiving various signals from the vehicle. Accordingly, computing device 117 receives signals that indicate conditions such as running of the vehicle, operation of engine 109, and voltage of main power source 101 from signal receiving terminal 119, and thereby, the charge/discharge control of storage battery 115 is performed according to the conditions with respect to DC/DC converter 113.

By using a power control device for regenerating system having such a configuration, regenerative power in speed reduction including great power generated for a short time is once charged into storage battery 115. And thereby, the regenerative power charged can be supplied to main power source 101 or load 105 during operation other than speed reduction. As a result, it is possible to efficiently recover braking energy.

According to the power control device described above, it is possible to save the fuel cost of vehicles through efficient recovery of energy. However, in the case of a device as in Patent document 1, when regenerative power is charged into storage battery 115, DC/DC converter 113 is controlled so as to execute constant current charging. Accordingly, for example, when the regenerative power generated by generator 107 in weak braking is very slight, the current regenerated is very slight. Consequently, when storage battery 115 is charged with constant current, the charging current is deficient, and power from main power source 101 is used to make up for the deficiency.

On the other hand, when the level of regenerative power generated by generator 107 in sudden braking operation or the like is very high, great current due to regeneration can be obtained, but storage battery 115 is charged with constant current, therefore it is sometimes unable to sufficiently recover the regenerative power thus generated.

Accordingly, in such a conventional apparatus, there arises a problem that the regenerative power recovery efficiency is lowered depending on conditions at the time of braking.

Patent document 1 Patent publication No. 3465293

### SUMMARY OF THE INVENTION

The present invention is intended to solve the conventional problem, and provides a power supply apparatus for vehicles, which is able to enhance the efficiency of recovering regenerative power irrespective of conditions at the time of braking.

The present invention comprises a generator, a load and first storage battery connected to the generator, a second storage battery connected to the generator via a DC/DC converter, and a controller connected to the DC/DC converter. Further, when the controller receives a regeneration signal emitted from outside, then it controls the DC/DC converter so that the voltage at the input/output terminal becomes the first target voltage that is lower by the first fixed value than the voltage of the input/output terminal to which the generator is connected in the DC/DC converter, thereby charging the second storage battery. Furthermore, it is configured in that when the reception of regeneration signal is ended, then the controller serves to control the DC/DC converter so that the voltage at the input/output terminal becomes the second target voltage that is higher by the second fixed value than the voltage at the input/output terminal, thereby discharging the second storage battery.

In the configuration described, when the controller receives the regeneration signal emitted from outside, then it controls the DC/DC converter so that the voltage at the input/output terminal becomes the first target voltage that is lower by the first fixed value than the voltage at the input/output terminal in the DC/DC converter, thereby charging the second storage battery. As a result, as compared with constant current charging conventionally performed, taking power out of the first storage battery or insufficient recovery of regenerative power can be more suppressed, displaying such an advantage that the recovering efficiency can be enhanced.

Further, when the reception of regeneration signal is ended, the controller serves to control the DC/DC converter so that the voltage at the input/output terminal becomes the second target voltage that is higher by the second fixed value than the voltage at the input/output terminal, thereby discharging the second storage battery. As a result, power of the second storage battery is supplied to both of the load and the first storage battery, and therefore, power of the second storage battery is quickly discharged.

Accordingly, it is possible to recover the next regenerative power as much as possible and to enhance the recovering efficiency.

### BRIEF DESCRIPTION OF DRAWINGS

Fig. 1 is a block circuit diagram of a power supply apparatus for vehicles in one preferred embodiment of the present invention.
Fig. 2 is a detailed circuit diagram of DC/DC converter of the power supply apparatus for vehicles in the preferred embodiment.
Fig. 3A is a time-based voltage characteristic chart of the power supply apparatus for vehicles in the preferred embodiment.
Fig. 3B is a timing chart of regeneration signal of the power supply apparatus for vehicles in the preferred embodiment.
Fig. 4 is a block circuit diagram of a conventional power control device.

### DESCRIPTION OF REFERENCE MARKS

- 1: Generator
- 2: Load
- 3: First storage battery
- 4: DC/DC converter
- 5: Second storage battery
- 6: Controller
- 8: Input/output terminal
- 9: Negative terminal
- 11: Second storage battery terminal
- 12: Current detector
- 13: Inductor
- 14: First switch
- 15: Second switch
- 16, 17: Input/output terminal voltage dividing resistor
- 23, 24: Second storage battery terminal voltage dividing resistor

### PREFERRED EMBODIMENTS FOR CARRYING OUT THE INVENTION

The preferred embodiments for carrying out the present invention will be described in the following with reference to the drawings.

### Preferred Embodiment

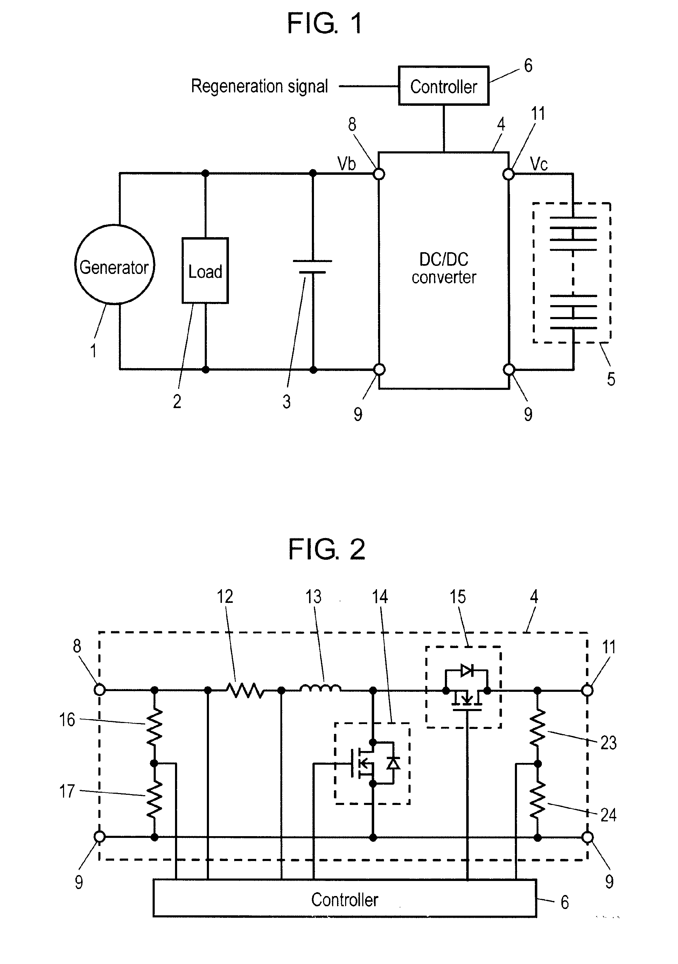

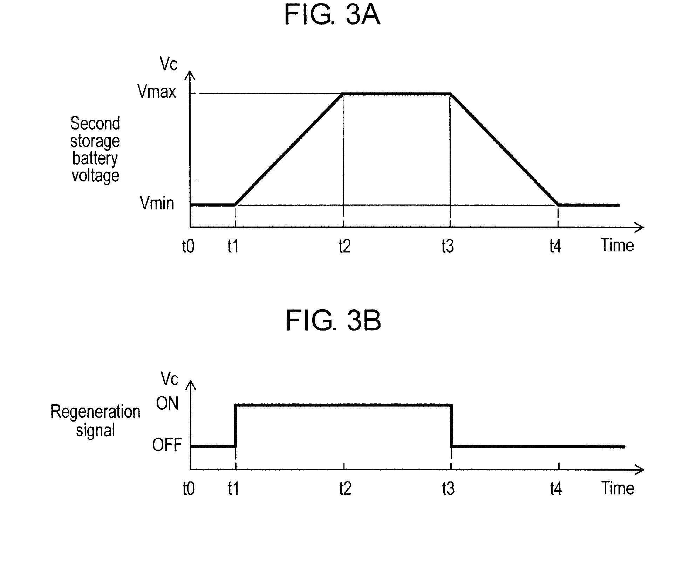

Fig. 1 is a block circuit diagram of a power supply apparatus for vehicles in one preferred embodiment of the present invention. Fig. 2 is a detailed circuit diagram of DC/DC converter of the power supply apparatus for vehicles in the present preferred embodiment. Fig. 3A is a time-based voltage characteristic chart of the second storage battery of the power supply apparatus for vehicles in the present preferred embodiment. Fig. 3B is a timing chart of regeneration signal of the power supply apparatus for vehicles.

In Fig. 1, generator 1 is mechanically connected to an engine (not shown), which generates power according to rotation of the engine. Load 2 is connected to generator 1. Load 2 is electric equipment mounted in the vehicle. First storage battery 3 is further connected to generator 1. First storage battery 3 is formed of lead battery, which serves for charging generative power of generator 1 and for discharging power to load 2.

Second storage battery 5 is connected to generator 1 via DC/DC converter 4. Second storage battery 5 has a configuration with a plurality of electric double-layer capacitors connected in series. The method of connecting electric double-layer capacitors is not limited to series connection, but it is allowable to employ parallel or series connection as needed according to power specifications, and using it as a single component is also allowable.

DC/DC converter 4 has a function of charging the regenerative power by generator 1 into second storage battery 5 and a function of discharging the power of second storage battery 5 to load 2 and first storage battery 3.

Further, controller 6 is connected to DC/DC converter 4. Controller 6 comprises a microcomputer and peripheral components, having a function of controlling DC/DC converter 4. Controller 6 also has a function of receiving regeneration signal emitted from outside (vehicle side control circuit not shown). In this case, regeneration signal includes a vehicle speed signal, and it is a signal at least based on either brake signal or fuel injection signal. That is, for example, when regeneration signal is produced by the vehicle side control circuit on the basis of vehicle speed signal and brake signal, regeneration signal is emitted when the vehicle speed is in a state of reduction according to the vehicle speed signal and also the brake signal is ON with the brake pressed. Similarly, when regeneration signal is produced on the basis of vehicle speed signal and fuel injection signal, then regeneration signal is emitted in case the vehicle speed is in a state of reduction according to the vehicle speed signal and also the fuel injection signal is OFF with the accelerator released. It is also preferable to be configured in that regeneration signal is emitted on the basis of three signals, vehicle speed signal, brake signal, and fuel injection signal. Also, the brake signal is allowable to be a brake pedal ON/OFF signal or a brake oil pressure signal. Here, these are generally called a brake signal. When a brake oil pressure signal is used, the braking force information can be included in the regeneration signal, and for example it is possible to make charging control of regenerative power in accordance with the braking force.

Also, DC/DC converter 4 comprises input/output terminal 8, two negative terminals 9, and second storage battery 11. Generator 1 is connected between input/output terminal 8 and one negative terminal 9. Second storage battery 5 is connected between second storage battery terminal 11 and the other negative terminal 9.

The power supply apparatus for vehicles is configured as described above. The internal structure of DC/DC converter 4 is described in the following by using Fig. 2.

Firstly, current detector 12 is connected to input/output terminal 8. And thereby, the value of current flowing to input/output terminal 8, that is, charge/discharge current value I can be detected. Both ends of current detector 12 are connected to controller 6. Accordingly, controller 6 detects the currents from voltages at both ends of current detector 12.

Inductor 13 is connected to the other end of current detector 12, first switch 14 and second switch 15 are respectively connected to the other end of inductor 13. The other end of first switch 14 is connected to negative terminal 9. The other end of second switch 15 is connected to second storage battery terminal 11.

First switch 14 and second switch 15 are configured in that ON/OFF operation of each switch can be controlled from outside, and in the present preferred embodiment, FET (field-effect transistor) is employed. The ON/OF control of first switch 14 and second switch 15 is performed by controller 6. When DC/DC converter 4 operates, first switch 14 and second switch 15 alternately repeat ON/OFF operation according to the ON-OFF ratio (time ratio) depending upon the voltage converting condition.

Also, for the detection of voltage Vb of input/output terminal 8, DC/DC converter 4 has two series-connected input/output terminal voltage dividing resistors 16, 17 connected between input/output terminal 8 and negative terminal 9. Accordingly, voltage Vb of input/output terminal 8 is outputted to controller 6 as the junction voltage of input/output terminal voltage dividing resistors 16, 17 proportional thereto.

Similarly, for the detection of Vc at second storage battery terminal 11, DC/DC converter 4 has two series-connected second storage battery terminal voltage dividing resistors 23, 24 connected between second storage battery terminal 11 and negative terminal 9. Accordingly, voltage Vc of second storage battery terminal 11 is outputted to controller 6 as the junction voltage of second storage battery terminal voltage dividing resistors 23, 24 proportional thereto.

According to DC/DC converter 4 having such a configuration, controller 6 detects charge/discharge current value I that flows in current detector 12 and is able to control so that excessive current will not flow therein. Also, it is possible to detect voltage Vc at second storage battery terminal 11 and to control so that excessive voltage will not be applied to second storage battery 5. Further, controller 6 is able to detect voltage Vb at input/output terminal 8 and serves to control so as to obtain the target voltage.

The detail in operation of the power supply apparatus for vehicles is described in the following with reference to Fig. 3A and Fig. 3B. Fig. 3A shows the time-based voltage characteristic of second storage battery 5, wherein the horizontal axis is time, and the vertical axis shows voltage Vc of second storage battery 5. Fig. 3B shows the timing of regeneration signal, wherein the horizontal axis is time, and the vertical axis shows regeneration signal ON/OFF

In Fig. 3A, suppose that the vehicle is not braked in a range from time t0 to t1 and it is in a state of normal run. Then, as shown in Fig. 3B, the regeneration signal is OFF. During this period, as shown in Fig. 3A, no regenerative power is stored in second storage battery 5, and voltage Vc thereof is to be minimum voltage Vmin. Minimum voltage Vmin is allowable to be nearly 0V with second storage battery 5 completely discharged. It is also allowable to previously decide a higher voltage as minimum voltage Vmin.

Next, at time t1, suppose that the vehicle is braked by the driver. Then, as shown in Fig. 3B, the vehicle side control circuit turns ON the regeneration signal and sends the signal to controller 6. As a result, controller 6 serves to control DC/DC converter 4 so that voltage Vb of input/output terminal 8 becomes first target voltage Vb1 that is lower by the first fixed value than voltage Vb of input/output terminal 8 at the time (time t1). Controller 6 detects voltage Vb of input/output terminal 8 by means of input/output terminal voltage dividing resistors 16, 17, and thereby, it is possible to control so that the voltage becomes first target voltage Vb1. As a result, second storage battery 5 is charged.

First target voltage Vb1 is set so as to be a little lower than the normal voltage of power generated by generator 1. Specifically, voltage Vb of input/output terminal 8 at time t1 corresponds to 14V that is the normal voltage of power generated by generator 1, and therefore, the first fixed value is set to 0.5V so that a little lower voltage 13.5V corresponds to first target voltage Vb1. Accordingly, for example, in case voltage Vb of input/output terminal 8 is lowered down to 13V, then first target voltage Vb1 is 12.5v because the first fixed value is 0.5V

Thus, the reason for setting the first fixed value is as described in the following. If the first fixed value is too large, first target voltage Vb1 will be set to a very small value as compared with voltage Vb of input/output terminal 8 at present. DC/DC converter 4 operates so that voltage Vb of input/output terminal 8 becomes first target voltage Vb1, and therefore, if the first fixed value is too large as mentioned above, then first target voltage Vb1 is too low and it causes DC/DC converter 4 to continue its full operation. Consequently, second storage battery 5 is excessively charged with power that is more than the regenerative power obtained as a result of braking the vehicle, and then power is taken out of first storage battery 3 to make up for the deficiency, causing the efficiency to be lowered.

In case voltage Vb of input/output terminal 8 should reach first target voltage Vb1, if first target voltage Vb1 is too low, the voltage applied to load 2 will be lowered as well, and there is a possibility that the operation is stopped. Accordingly, it is preferable to decide the first fixed value so that first target voltage Vb1 is within the normal operation voltage (ranging from 10.5V to 16V for example) of load 2.

On the other hand, if the first fixed value is too small, first target voltage Vb1 is set to a value nearly equal to voltage Vb of input/output terminal 8 at present. As a result, first target voltage Vb1 is too close to voltage Vb, and therefore, voltage Vb reaches the first target voltage Vb1 immediately after full operation of DC/DC converter 4. Consequently, DC/DC converter 4 reduces the current for charging second storage battery 5, causing the efficiency to be lowered because the regenerative power obtained by braking the vehicle is not sufficiently recovered.

Accordingly, since the efficiency is lowered irrespective of whether the first fixed value is too large or too small, the first fixed value is decided in advance, taking into account the capacity of second storage battery 5 used, the normal operation voltage range of load 2, the conversion efficiency and capability of DC/DC converter 4. In the present preferred embodiment, as a result of consideration from this point of view, because the efficiency obtained is excellent when the fist fixed value is set to 0.5V, the value is adopted.

When first target voltage Vb1 is set as mentioned above, DC/DC converter 4 serves to control so that voltage Vb of input/output voltage 8 becomes first target voltage Vb1. In this case, at time t1, the voltage difference between the two is 0.5V (=first fixed value), and therefore, in order to lessen the voltage difference, DC/DC converter 4 is fully operated. As a result, second storage battery 5 is preferentially charged with regenerative power generated by generator 1. Accordingly, as shown in Fig. 3A, voltage Vc of second storage battery 5 increases with lapse of time.

In control circuit 6, charging current value I is watched by current detector 12 to prevent flowing of more charging current than fixed current value Im that is the allowable upper limit even when DC/DC converter 4 is fully operated. Accordingly, if charging current value I becomes greater than fixed current value Im, controller 6 serves to control DC/DC converter 4 so that the value becomes equal to fixed current value Im. In this way, deterioration of DC/DC converter 4 due to excessive current is suppressed by controlling the current value. In the present preferred embodiment, fixed current value Im is set to the maximum supply current value (120A for example) of generator 1. Accordingly, it is controlled so that the current flowing in DC/DC converter 4 is 120A max.

By controlling the current as described above, the regenerative power obtained is preferentially charged into second storage battery 5, enabling very efficient recovery of the power. Further, the power is efficiently recovered by executing the following operation according to the amount of regenerative power obtained.

Firstly, when the amount of regenerative power obtained is very little with the brake slightly pressed, generator 1 is controlled so as to make the output voltage constant, and the level of the current generated becomes lower. In this condition, DC/DC converter 4 is controlled so that voltage Vb of input output terminal 8 becomes the first target voltage Vb1 that is lower than the voltage, and the current generated is preferentially charged into second storage battery 5 via DC/DC converter 4. In this case, since constant current control conventionally performed is not executed on DC/DC converter 4, when the charging current is slight, second storage battery 5 is charged with the slight current as it is. Accordingly, there is almost no possibility that power is taken out of first storage battery 3. Therefore, it is possible to efficiently recover the regenerative power.

On the other hand, when the brake is fully pressed, obtaining a large amount of regenerative power, then the current generated is greater contrary to the case of pressing the brake slightly. Also in this case, DC/DC converter 4 is controlled so that voltage Vb of input/output terminal 8 becomes first target voltage Vb1 that is lower than the voltage. As a result, great current is preferentially charged into second storage battery 5 via DC/DC converter 4. In this case, because the amount of power generated is great, voltage Vb of input/output terminal 8 is hard to reach the first target voltage Vb1, and DC/DC converter 4 is fully operated. Accordingly, DC/DC converter 4 continues applying the charging current without limit until charging current value I reaches the fixed current value Im. In this way, the regenerative power obtained is charged into second storage battery 5 as much as possible. Therefore, insufficient recovery of regenerative power conventionally caused due to constant current control is suppressed and it is possible to enhance the efficiency.

As described above, the power supply apparatus for vehicles of the present preferred embodiment is able to enhance the regenerative power recovering efficiency irrespective of the conditions (slightly or fully braked) in braking operation.

When second storage battery 5 is charged with regenerative power, causing voltage Vc of second storage battery 5 to increase with lapse of time, then the voltage soon reaches full-charge voltage Vmax at time t2 as shown in Fig. 3A. In this case, full-charge voltage Vmax can be decided as the value obtained by multiplying the rated voltage of electric double-layer capacitor by the number of series-connected pieces. When second storage battery 5 exceeds the full-charge voltage Vmax, the life of second storage battery 5 will shorten. Therefore, controller 6 watches the voltage Vc (equal to the voltage of second storage battery 5) of second storage battery terminal 11 by means of second storage battery terminal voltage dividing resistors 23, 24, and when the voltage reaches the full-charge voltage Vmax, it serves to stop the operation of DC/DC converter 4. In that case, as shown in Fig. 3B, since the regeneration signal is still ON at time t2, the regenerative power is in a state of being generated. However, when full-charge voltage Vmax is detected at time t2, charging the second storage battery 5 is discontinued, giving priority to the prevention of second storage battery 5 from being charged with excessive voltage.

Consequently, the regenerative power continued to be generated by generator 1 is supplied to load 2 as DC/DC converter 4 is stopped, and at the same time, the power is charged into first storage battery 3. Since first storage battery 3 is a lead battery, high-speed charging is not advantageous, but regenerative power immediately generated after braking the vehicle (around time t1) is already charged into second storage battery 5 before time t2, and therefore, regenerative power continued to be slowly generated thereafter can be charged into first storage battery 3. As a result of such operation, it is possible to realize more efficient recovery of regenerative power.

Next, suppose that the regeneration signal turns OFF as shown in Fig. 3B with the vehicle completely braked at time t3. Then, controller 6 serves to control DC/DC converter 4 so as to discharge the power charged into second storage battery 5. In that case, DC/DC converter is controlled so that voltage Vb of input/output terminal 8 becomes the second target voltage Vb2 that is higher by the second fixed value than voltage Vb of input/output terminal 8 at the time (time t3). In this way, second storage battery 5 is discharged.

Second target voltage Vb2 is set to a level of voltage slightly higher than the normal voltage generated by generator 1. Specifically, voltage Vb of input/output terminal 8 at time t3 is equivalent to the constant voltage output (14V) of generator 1. Accordingly, the second fixed value is set to 0.5V so that the second target voltage Vb2 becomes 14.5V that is slightly higher than the voltage.

The set-value of the second fixed value is decided as described in the following. If the second fixed value is too large, second target voltage Vb2 is set to a value that is greatly higher than voltage Vb of input/output terminal 8 at present, and there is a possibility that it exceeds the upper limit (16V) of the normal operation voltage range of load 2. Accordingly, it is necessary to decide the second fixed value so that second target voltage Vb2 is also within the normal operation voltage range (from 10.5V to 16V) of load 2.

On the other hand, if the second fixed value is too small, second target voltage Vb2 is set to a value almost equal to voltage Vb of input/output terminal 8 at present. As a result, since second target voltage Vb2 is too close to voltage Vb, voltage Vb reaches the second target voltage Vb2 immediately after full operation of DC/DC converter 4. Consequently, DC/DC converter 4 reduces the current discharged from second storage battery 5 and cannot sufficiently supply the recovered regenerative power to load 2 or first storage battery 3, resulting in that voltage Vc of second storage battery 5 is very slowly lowered. If regenerative power due to next braking is generated during the period, there is a possibility that the next regenerative power cannot be sufficiently recovered because power is still stored in second storage battery 5. As a result, the efficiency becomes lowered.

Accordingly, the second fixed value is also set to an optimum value beforehand the same as for the first fixed value. In this preferred embodiment, as a result of checking the efficiency and the like, the second fixed value is set to 0.5V the same as for the first fixed value. That is, it is preferable to set the first fixed value and the second fixed value within the range of a predetermined voltage. The preferable range of voltage is a range in which the load normally operates.

As described above, when the second target voltage Vb2 is set, DC/DC converter 4 is controlled so that voltage Vb of input/output terminal 8 becomes second target voltage Vb2. In this case, since the voltage difference between the two at time t3 is 0.5V (=second fixed value), DC/DC converter 4 is fully operated for lessening the voltage difference. As a result it is controlled so that voltage Vb of input/output terminal 8 becomes higher than the voltage (about 14V in normal operation) of first storage battery 3, and therefore, the power of second storage battery 5 is preferentially supplied to load 2 rather than first storage battery 3, and also the power is supplied to first storage battery 3, enabling its charging. Accordingly, it is possible to effectively use the regenerative power, enhancing the efficiency and also quickening the charging of second storage battery 5. Actually, as shown in Fig. 3A, the voltage (Vc) of second storage battery 5 is gradually lowered with lapse of time in the range from time t3 to t4.

Further, since voltage Vb of input/output terminal 8 is controlled so as to become higher than the generation voltage (14V) of generator 1, the amount of power generated by generator 1 is reduced. As a result, the burden on the engine will be reduced, making it possible to achieve the fuel cost saving purpose.

Generally, also at the time of charging the second storage battery 5, it is possible to enhance the efficiency by effectively using the regenerative power and lightening the burden on the engine.

Same as in the charging operation to second storage battery 5, controller 6 watches the charging current value I by means of current detector 12 so that more discharge current than fixed current value Im (120A) will not flow to DC/DC converter 4 even at the time of discharge. Therefore, if charging current value I exceeds fixed current value Im, controller 6 serves to control the DC/DC converter 4 in order to adjust the current value to fixed current value Im, suppressing deterioration caused due to over-current.

Also, controller 6 watches voltage Vc of second storage battery terminal 11 by means of second storage battery terminal voltage dividing resistors 23, 24, and when the voltage reaches minimum voltage Vmin, it controls DC/DC converter 4 to stop its operation. The behavior of voltage Vc at that time is shown in Fig. 3A. Voltage Vc reaches minimum voltage Vmin at time t4, and at the point, controller 6 serves to stop the operation of DC/DC converter 4, therefore voltage Vc after time t4 is maintained at minimum voltage Vmin. Since this condition is same as the one at time t0, the operation is similarly repeated thereafter such that regenerative power is charged at the time of braking (from time t1 to t2) and the regenerative power is discharged at the end of braking (from time t3 to t4). In this way, it is possible to make the effective use of regenerative power and to enhance the efficiency of the whole vehicle.

Due to the configuration and operation described above, when controller 6 receives regeneration signal, it controls DC/DC converter 4 so that voltage Vb of input/output terminal 8 becomes the first target voltage Vb1 that is lower by the first fixed value than voltage Vb of input/output terminal 8 at the time in order to charge second storage battery 5. When the reception of regeneration signal is ended, it controls DC/DC converter 4 so that voltage Vb of input/output terminal 8 becomes second target voltage Vb2 that is higher by the second fixed value than voltage Vb of input/output terminal 8 at the time in order to discharge second storage battery 5. Accordingly, regenerative power can be efficiently recovered and effectively used irrespective of conditions during braking, and it is possible to realize a power supply apparatus for vehicles capable of saving the fuel cost.

In the present preferred embodiment, an electric double-layer capacitor is used for second storage battery 5, but it is also allowable to use other capacitor such as electro-chemical capacitor. In case an electro-chemical capacitor is used, deterioration is caused due to over-discharge, and therefore, it is necessary to set the voltage so that minimum voltage Vmin is not over-discharged.

### INDUSTRIAL APPLICABILITY

The present invention is able to enhance the recovery efficiency of regenerative power, and can be used as a power supply apparatus for vehicles, which recovers regenerative energy during vehicle speed reduction in particular.

## Claims

1. A power supply apparatus for vehicles, comprising a generator,
a load and a first storage battery which are connected to the generator,
a second storage battery connected to the generator via a DC converter, and
a controller connected to the DC converter,
wherein the controller, receiving a regeneration signal emitted from outside, controls the DC converter so that the voltage of an input/output terminal becomes a first target voltage that is lower by a first fixed value than the voltage of the input/output terminal, to which the generator is connected, in the DC converter at the time in order to charge the second storage battery, and
when reception of the regeneration signal is ended, the controller controls the DC converter so that the voltage of the input/output terminal becomes a second target voltage that is higher by a second fixed value than the voltage of the input/output terminal at the time in order to discharge the second storage battery.

2. The power supply apparatus for vehicles of claim 1, wherein the regeneration signal is a signal based on at least any one of a vehicle speed signal, a brake signal, and a fuel injection signal.

3. The power supply apparatus for vehicles of claim 1, wherein the DC converter is equipped with a current detector connected to the controller, and
the controller controls the DC converter so that a charging current value detected by the current detector is smaller than a fixed current value when the second storage battery is charged.

4. The power supply apparatus for vehicles of claim 1, wherein the first target voltage and the second target voltage are within a range of predetermined voltage.

## Amended claims

### Amended claims under Art. 19.1 PCT

1. A power supply apparatus for vehicles, comprising a generator,
a load and a first storage battery which are connected to the generator,
a second storage battery connected to the generator via a DC converter, and
a controller connected to the DC converter,
wherein the controller, receiving a regeneration signal emitted from outside, controls the DC converter so that the voltage of an input/output terminal becomes a first target voltage that is lower by a first fixed value than the voltage of the input/output terminal, to which the generator is connected, in the DC converter at the time in order to charge the second storage battery, and
when reception of the regeneration signal is ended, the controller controls the DC converter so that the voltage of the input/output terminal becomes a second target voltage that is higher by a second fixed value than the voltage of the input/output terminal at the time in order to discharge the second storage battery.

2. The power supply apparatus for vehicles of claim 1, wherein the regeneration signal is a signal based on at least any one of a vehicle speed signal, a brake signal, and a fuel injection signal.

3. (Amended) The power supply apparatus for vehicles of claim 1, wherein the DC converter is equipped with a current detector connected to the controller, and
the controller preferentially controls the DC converter so that a charging current value detected by the current detector is smaller than a fixed current value when the second storage battery is charged.

4. The power supply apparatus for vehicles of claim 1, wherein the first target voltage and the second target voltage are within a range of predetermined voltage.
